# FASCICULE DE BREVET EUROPEEN

(11) **EP 0 321 359 B1**
(45) Date de publication et mention de la délivrance du brevet: **05.01.1994**
(21) Numéro de dépôt: 88403225.1
(22) Date de dépôt: 16.12.1988
(51) Int. Cl.: C08G 69/50, C08F 20/56

(54) **Procédé de préparation de poly beta-alanine réticulée sous forme de microsphères**
Verfahren zur Herstellung von vernetztem Poly(beta-Alanin) in der Form von Mikrokugelteilchen
Process for the manufacture of cross-linked poly(beta-alanine) in the form of micro-spheres

(30) Priorité: 16.12.1987 FR 8717573
(43) Date de publication de la demande: 21.06.1989
(73) Titulaire: L'OREAL, 75008 Paris (FR)
(72) Inventeur: Lapoiriere, Claudine, F-94170 Le Perreux (FR); Mahieu, Claude, F-75017 Paris (FR); Papantoniou, Christos, F-95160 Montmorency (FR)
(74) Mandataire: Nony, Michel

(56) Documents cités:
- DE-A- 2 705 873
- FR-A- 2 530 250
- US-A- 4 082 730

## Description

La présente invention a pour objet un procédé de préparation de poly β-alanine réticulée sous forme de sphères présentant une faible dispersité de taille.

La poly β-alanine réticulée a été décrite dans le brevet français n°83.11609 (2.530.250) ainsi d'ailleurs que son procédé d'obtention.

Selon ce procédé, on prépare tout d'abord par polymérisation à partir d'acrylamide, la poly β-alanine soluble dans l'eau obtenue notamment selon le brevet américain n° 4.082.730, puis dans un deuxième temps l'on réticule, en suspension dans un solvant organique, une solution aqueuse de poly β-alanine à l'aide d'un agent réticulant.

Les sphères de poly β-alanine réticulée obtenues sont alors soumises à une opération de tamisage en vue d'obtenir des sphères possédant une certaine homogénéité de taille.

Le solvant organique peut être du cyclohexane, du toluène, du benzoate de méthyle, du benzoate de benzyle, du chlorobenzène ou encore du dichloroéthane.

Selon ce procédé, les sphères sont formées lors de l'étape de réticulation et leur taille dépend essentiellement de la nature et de la quantité de l'agent de suspension utilisé.

Il est toutefois impossible d'obtenir par ce procédé des sphères ayant une faible dispersité de taille de telle sorte que les sphères une fois obtenues doivent être obligatoirement soumises à un tamisage ce qui complique sérieusement le procédé et augmente de façon non négligeable le prix de revient des sphères de poly β-alanine réticulée.

Pour certaines applications, il est en effet important que les sphères présentent une faible dispersité de taille notamment dans leur utilisation comme supports pour colonnes de chromatographie ou encore comme véhicule de substances actives.

Le procédé selon l'invention permet d'obtenir, avec un bon rendement, la poly β-alanine réticulée sous forme de microsphères, celles-ci ayant une très faible dispersité de taille, ce qui dès lors permet d'éviter l'étape longue et laborieuse du tamisage.

Le procédé selon l'invention est essentiellement caractérisé par le fait qu'il comprend les étapes consistant:
a) à polymériser de l'acrylamide dans le mélange solvant tertio-butanol/toluène, en présence d'un initiateur de polymérisation et du copolymère octadécène-anhydride maléïque comme agent de suspension,
b) à soumettre la suspension de microsphères de poly β-alanine obtenues à une réticulation à l'aide d'un dialdéhyde comme agent réticulant, et
c) à isoler les microsphères de poly β-alanine réticulée obtenues.

Selon le procédé de l'invention, la faible dispersité de taille des microsphères de poly β-alanine réticulée est due essentiellement à la nature et à la quantité du mélange solvant utilisé lors de la polymèrisation de l'acrylamide.

Comme mentionné ci-dessus, il s'agit d'un mélange de tertio-butanol et de toluène, dans des rapports compris entre 1:24 et 10:1 et de préférence entre 1:6 et 6:1.

En ce qui concerne la taille même des microsphères, celle-ci dépend essentiellement du rapport entre le tertio-butanol et le toluène mais également du rapport du mélange solvant à l'acrylamide et de la vitesse d'agitation.

De façon générale, plus on augmente la proportion de tertio-butanol par rapport au toluène, plus le diamètre des microsphères diminue.

L'initiateur de polymérisation est de préférence du tertio-butylate de sodium ou de potassium utilisé en une proportion d'environ 0,1 à environ 2 moles/% par rapport à l'acrylamide.

La température de polymérisation est de 60°C à 100°C mais de préférence d'environ 80°C.

Le dialdéhyde est le glutaraldéhyde, (sous forme d'une solution aqueuse entre 20 et 25%) utilisé en une proportion comprise entre 1 et 15% en poids par rapport au poids d'acrylamide de départ.

Les microsphères obtenues par le procédé selon l'invention, lorsqu'elles sont destinées à un usage thérapeutique, peuvent être soumises à une réaction de réduction, par exemple par le borohydrure de sodium ou tout autre agent réducteur similaire, en vue de réduire les fonctions aldéhydes libres qui pourraient subsister.

On va maintenant donner à titre d'illustration et sans aucun caractère limitatif plusieurs exemples de préparation de poly β-alanine réticulée sous forme de microsphères selon le procédé de l'invention.

### EXEMPLE 1

A. Dans un réacteur de 3 litres muni d'un agitateur de type à "ancre" d'un diamètre de 90mm, d'une arrivée d'azote, d'une ampoule d'addition cet d'une tête de colonne à distiller on introduit: 1125g de toluène, 444g de tertio-butanol et 0,75g de copolymère octadécène - anhydride maléïque (vendu sous la dénomination de "PA-18" par la Société GULF.Après chauffage de ce mélange à 70°C on ajoute 150g d'acrylamide. On porte alors la température à 100°C et on distille 90ml du mélange azéotrope eau/ toluène tertio-butanol. Après la fin de la distillation on refroidit le mélange réactionnel à 80°C, et on ajuste la vitesse d'agitation à 600t/mn. On ajoute alors en 10 minutes une solution de 3,36g de tertio-butylate de potassium dans 62g de tertio-butanol. L'ampoule d'addition est rincée par 75g de toluène. Après agitation pendant 5 heures à 80°C, on laisse revenir à température ambiante . On ajoute ensuite, goutte à goutte, au mélange 11,25ml d'acide chlorhydrique concentré.
B. A la suspension de microsphères de poly β-alanine ainsi obtenue on ajoute, en 30 minutes, sous vive agitation (600t/min) et à une température de 50°C, 42g d'une solution aqueuse à 25% de glutaraldéhyde. Après avoir maintenu l'agitation pendant 4 heures à cette température on laisse revenir la suspension à température ambiante.

Après décantation, les solvants surnageants sont éliminés et les microsphères sont lavées deux fois par 500ml d'éthanol. L'essorage après chaque lavage est effectué par centrifugation (3.500t/min). Un lavage par 15 litres d'eau est ensuite effectué en continu, puis l'eau est éliminée jusqu'à un volume final de mélange de 600ml.

La poly β-alanine réticulée est ensuite séchée par lyophilisation et l'on obtient 135g d'une poudre blanche, dont le diamètre des microsphères est en moyenne de 4,60 ± 1,19µm, déterminé par la technique d'analyse d'images sur un appareil "QUANTIMET 900" de la Société CAMBRIDGE INSTRUMENTS CO.

Les microsphères obtenues absorbent 1,5 fois leur poids en eau.

### EXEMPLE 2

A la suspension de microsphères obtenue à l'exemple 1 (A) on ajoute en 30 mn sous vive agitation (600t/min) et à une température de 50°C, 7,5g d'une solution aqueuse à 20% de glutaraldéhyde. Après avoir maintenu l'agitation pendant 4 heures à cette température, on laisse revenir la suspension à température ambiante. Après décantation, les solvants surnageants sont éliminés et les microsphères sont lavées deux fois par 500ml d'éthanol. L'essorage après chaque lavage est effectué par centrifugation (3500t/min). Un lavage par 15 litres d'eau est ensuite effectué en continu, puis l'eau est éliminée jusqù'à un volume final de mélange de 600ml.

La poly β-alanine réticulée est ensuite séchée par lyophilisation et l'on obtient 135g de poudre blanche dont le diamètre des microsphères est en moyennes de 4,22 ± 2,49µm, mesuré suivant la même méthode qu'à l'exemple 1.

Les microsphères obtenues absorbent 3,4 fois leur poids en eau.

### EXEMPLE 3

Cet exemple est identique à l'exemple 1 sauf que l'on utilise dans l'étape (A) 222g de tertio-butanol au lieu de 444g.

Les microsphères de poly β-alanine réticulée obtenues ont un diamètre compris entre 28,7µm et 45,6µm pour environ 85% en poids de la poudre. La mesure a été effectuée sur un appareil "Coulter Counter Model TA IL" muni de "Population Accessory" au moyen d'un tube à orifice de 280µm commercialisé par Coulter Electronics Ltd.

### EXEMPLE 4

Cet exemple est identique à l'exemple 1 sauf que l'on utilise dans l'étape (A) 1110g de tertio-butanol au lieu de 444g.

Les microsphères de poly β-alanine réticulée obtenues ont un diamètre en moyenne de 0,81 ± 0,55µm, mesuré suivant la même méthode qu'à l'exemple 1.

### EXEMPLE 5

Selon le même mode opératoire que celui décrit à l'exemple 1 on prépare des sphères de poly β-alanine réticulée à partir de:

| | |
|---|---|
| - acrylamide | 50g |
| - toluène | 467g |
| - tertio-butanol | 833g |
| - copolymère octadécène-anhydride maléïque, "PA-18" | 0,7g |
| - tertio-butylate de potassium (dans 20g de tertio-butanol) | 1,12g |
| - acide chlorhydrique concentré | 7ml |
| - glutaraldéhyde (solution à 25%) | 30g |

Selon cet exemple le temps de polymérisation a été porté à 15 heures avec une agitation de 800t/min.

Après lavage et séchage par lyophilisation on obtient 40g d'une poudre blanche dont le diamètre des microsphères est en moyenne de 0,63 ± 0,27µm, mesuré suivant la même méthode qu'à l'exemple 1.

### EXEMPLE 6

Cet exemple est identique à l'exemple 5 sauf que le temps de polymérisation a été ramené à 5 heures avec une agitation de 400t/min.

Après lavage et séchage par lyophilisation on obtient 20g de microsphères dont le diamètre est en moyenne de 0,25 ± 0,12µm; mesuré suivant la même méthode qu'à l'exemple 1.

### EXEMPLE 7

A la suspension de microsphères de poly β-et alanine obtenues à l'exemple 1(A), on ajoute 150 ml d'eau sous vive agitation (600t/min) à une température de 50°C, puis, régulièrement en 15 minutes, 18g d'une solution aqueuse à 25% de glutaraldéhyde. Après avoir maintenu l'agitation pendant 4 heures à cette température, on laisse revenir la suspension à température ambiante. Après décantation, les solvants surnageants sont éliminés et les microsphères sont lavées deux fois par 500ml d'éthanol. L'essorage après chaque lavage est effectué par centrifugation (3500t/min). Un lavage par 15 litres d'eau est ensuite effectué en continu puis l'eau est éliminée jusqu'à un volume final de mélange de 600ml. Le polymère gonflé est enfin séché par lyophilisation et l'on obtient 132g de poudre blanche constituée de microsphères dont le diamètre moyen de 4,05 ± 2,02 µm est déterminé par la technique d'analyse d'images sur un appareil "QUANTIMET 900" de la Société CAMBRIDGE INSTRUMENTS CO.

### EXEMPLE 8

### Réduction des fonctions aldéhydes résiduelles.

A 150g de microsphères de poly β-alanine réticulée obtenues de la même façon qu'à l'exemple 7 on ajoute 2,2 litres d'eau et on homogénéise par agitation. Après refroidissement à une température comprise entre 5 et 10°C on ajoute lentement une solution refroidie de borohydrure de sodium dans l'eau (5,2g de NaBH₄ dans 600ml d'eau refroidie à 5°C). On maintient le milieu réactionnel entre 5 et 10°C pendant 5 heures puis on amène le pH à 7 par addition d'acide acétique.

Après centrifugation du mélange et dispersion du résidu solide dans 450ml d'eau, on le soumet à un lavage en continu par 5 litres d'eau (lavage en cellule de type "AMICON" équipée de filtre DIAPOR 0,2µm, pression 2 bars, agitation durant la totalité du lavage). Les microsphères hydratées sont ensuite séchées parc lyophilisation. L'absence de coloration en présence du réactif de Schiff permet de conclure que les fonctions aldéhydes résiduelles ont été réduites. Après analyse le diamètre des microsphères est identique aux microsphères de départ (≃ 4µm).

### EXEMPLE COMPARATIF

### Préparation de sphères selon le brevet français n°83.11609 (2.530.250).

Dans une solution de 18g d'éthyl hydroxyéthylcellulose, vendue par la Société HERCULES sous la dénomination de "EXTRA HIGH", dans 900g de cyclohexane chauffé à 50°C, on introduit 150g de poly β-alanine en solution dans 75g d'eau amenée à pH=1 par de l'acide chlorhydrique concentré, diluée par 75g d'une solution de glutaraldéhyde à 25% dans l'eau. La suspension est chauffée à 50-55°C, sous agitation à 1300t/min pendant 3 heures. Après avoir laissé revenir la suspension à température ambiante, on procède au lavage des microsphères comme indiqué à l'exemple 1 ci-dessus.

Après séchage on obtient 100g de microsphères de poly β-alanine réticulée ayant la répartition par taille suivante:

| Diamètre (µm) | % poids |
|---|---|
| 9,0 | 0,4 |
| 11,4 | 1,1 |
| 14,3 | 1,9 |
| 18,1 | 2,8 |
| 22,8 | 6,2 |
| 28,7 | 9,5 |
| 36,2 | 14,5 |
| 45,6 | 20,3 |
| 57,4 | 21,6 |
| 72,4 | 16,8 |
| 91,2 | 3,2 |
| 114,9 | 1,6 |

La mesure a été effectuée sur un appareil "Coulter Counter Model TA II" muni de "Population Accessory" au moyen d'un tube à orifice de 280µm commercialisé par Coulter Electronics LTD.

La répartition par taille des sphères de poly β-alanine de l'exemple 3, déterminée selon la même méthode, a donné les-résultats suivants:

| Diamètre (µm) | % poids |
|---|---|
| 9,0 | 0,9 |
| 11,4 | 1,0 |
| 14,3 | 0,9 |
| 22,8 | 1,8 |
| 28,7 | 16,9 |
| 36,2 | 44,0 |
| 45,6 | 23,9 |
| 57,4 | 6,7 |
| 72,4 | 2,5 |
| 91,2 | 0 |
| 114,9 | 0 |

Comme on peut le constater on obtient, par le procédé selon l'invention, une plus faible disparité de la taille des sphères, dont 85% en poids sont compris entre 28,7 et 45,6µm contre 44% en poids suivant le procédé du brevet français n°83.11609 (2.530.250).

## Revendications

1. Procédé de préparation de poly β-alanine réticulée sous forme de microsphères ayant une faible dispersité de taille, caractérisé par le fait qu'il comprend les étapes consistant :
a) à polymériser de l'acrylamide dans le mélange solvant tertio-butanol/toluène dans un rapport compris entre 1:24 et 10:1, en présence d'un initiateur de polymérisation et du copolymère octadécène-anhydride maléïque comme agent de suspension, à une température de 60 à 100°C.
b) à soumettre la suspension de microsphères de poly β-alanine obtenue à une réticulation à l'aide, comme agent réticulant, de glutaraldéhyde, en solution aqueuse entre 20 et 25 %, utilisé en une proportion comprise entre 1 et 15 % en poids par rapport à l'acrylamide de départ, et
c) à isoler les microsphères de poly β-alanine réticulée obtenues.

2. Procédé selon la revendicattion 1, caractérisé par le fait que le mélange solvant tertio-butanol/toluène est utilisé dans des rapports compris entre 1:6 et 6:1.

3. Procédé selon la revendication 1, caractérisé par le fait que l'initiateur de polymérisation est le tertio-butylate de sodium utilisé en une proportion de 0,1 à 2 moles/% par rapport à l'acrylamide.

## Claims

1. Process for the preparation of crosslinked poly-β-alanine in the form of microspheres of narrow size scatter, characterized in that it comprises the stages consisting:
a) in polymerizing acrylamide in the tert-butanol/toluene solvent mixture in a ratio of between 1:24 and 10:1, in the presence of a polymerization initiator and of the octadecenemaleic anhydride copolymer as suspension agent, at a temperature of 60 to 100°C,
b) in subjecting the poly-β-alanine microsphere suspension obtained to a crosslinking with the aid, as a crosslinking agent, of glutaraldehyde in agueous solution between 20 and 25 %, employed in a proportion of between 1 and 15 % by weight relative to the starting acrylamide and
c) in isolating the microspheres of crosslinked poly-β-alanine which are obtained.

2. Process according to Claim 1, characterized in that the tert-butanol/toluene solvent mixture is employed in ratios of between 1:6 and 6:1.

3. Process according to Claim 1, characterized in that the polymerization initiator is sodium tert-butylate employed in a proportion of 0.1 to 2 moles/% relative to acrylamide.

## Patentansprüche

1. Verfahren zur Herstellung von vernetztem Poly-ß-alanin in Form von Mikrokügelchen mit geringer Größenstreuung,
**gekennzeichnet durch**
folgende Schritte:
a) Polymerisation von Acrylamid in einem Lösungsmittelgemisch aus tert.-Butanol/Toluol in einem Verhältnis von 1:24 bis 10:1 in Gegenwart eines Polymerisationsinitiators und eines Octadecen-Maleinsäureanhydrid-Copolymers als Suspendiermittel, bei einer Temperatur von 60 bis 100°C;
b) Vernetzung der erhaltenen Suspension von Poly-ß-alanin-Mikrokügelchen mit Hilfe von Glutaraldehyd als Vernetzungsmittel, in 20- bis 25%iger wäßriger Lösung, eingesetzt in einem Anteil von 1 bis 15 Gew.-%, bezogen auf das ursprüngliche Acrylamid; und
c) Isolierung der gebildeten Mikrokügelchen aus vernetztem Poly-ß-alanin.

2. Verfahren nach Anspruch 1,
**dadurch gekennzeichnet,**
daß das Lösungsmittelgemisch aus tert.-butanol/Toluol in einem Verhältnis von 1 : 6 bis 6 : 1 verwendet wird.

3. Verfahren nach Anspruch 1,
**dadurch gekennzeichnet,**
daß der Polymerisationsinitiator Natrium-tert.-Butylat ist und in einem Anteil von 0,1 - 2 Mol % bezogen auf Acrylamid verwendet wird.
